# EUROPEAN PATENT SPECIFICATION

(11) **EP 0 349 027 B1**
(45) Date of publication and mention of the grant of the patent: **02.08.1995**
(21) Application number: 89201347.5
(22) Date of filing: 25.05.1989
(51) Int. Cl.: H04N 5/335

(54) **Image portion determination of a solid-state imaging device**
Bildteil-Feststellung einer Festkörper-Bildaufnahmevorrichtung
Détermination d'une portion d'image d'un dispositif de prise d'image à l'état solide

(30) Priority: 25.05.1988 NL 8801342
(43) Date of publication of application: 03.01.1990
(73) Proprietor: INTERUNIVERSITAIR MICROELEKTRONICA CENTRUM VZW, 3030 Leuven-Heverlee (BE)
(72) Inventor: Bart, Marcel Henrietta Ludovicus Dierickx, B-2510 Mortsel (BE)
(74) Representative: Land, Addick Adrianus Gosling

(56) References cited:
- EP-A- 0 157 141
- EP-A- 0 260 858
- WO-A-84/03810
- WO-A-89/01129
- US-A- 4 219 845
- MICROPROCESSING AND MICROPROGRAMMING, vol. 14, no. 3/4, October/November 1984,pages 125-132; D. PANOGIOTOPOULOS et al.: "The VLSI design of a two dimensionalimage processing array"

## Description

The present invention relates to a transducing device for transducing radiation.

The International application WO89/01129 which is a document under Art. 54(3) of the EPC, as it was published after the priority date of the present application, discloses a transducing device comprising an array of radiation sensitive elements, comparator elements connected to an array part of said elements for comparing the amount of radiation received by a radiation sensitive element with predetermined threshold value, a measuring element connected to said radiation sensitive elements for the determination of the amount of incident radiation to said corresponding element during a predetermined time period and an encoding element connected to the comparator elements for producing a digital number of the element on which the amount of incident radiation was above the treshold value.

European patent application EP-A-157141 discloses an array of elements sensitive for radiation, comparator elements connected to an array part of said elements, for comparing the amount of radiation received by a radiation sensitive element with a predetermined threshold value, an encoding element connected to said comparator elements for producing a digital representation of the elements on which radiation was incident.

In this known transducing device the radiation sensitive elements are scanned sequentially, e.g. for the scanning of pictures in a television or video apparatus. If only on one, two or a few locations radiation is to be detected by said transducing device, such known device produces a huge amount of signals, of which only a few have a relevant information content.

It is an object of the present invention to obviate the above disadvantage encountered with transducing devices from the prior art, so that when only one, two or a few radiation sensitive elements pick up radiation, only that information will be readily available at the output of the transducing device.

The present invention provides a transducing device for transducing radiation, comprising:
- an array of elements arranged along lines and sensitive to radiation;
- comparator means connected to said radiation sensitive elements, for comparing the amount of radiation received by each of said radiation sensitive elements with a predetermined threshold value;
- measuring means connected to each of said radiation sensitive elements for determining, during a predetermined time period, the maximum amount of radiation detected by a single element, if more than one of said elements received radiation above said threshold, or the amount of radiation incident upon a single element, if only said single element received radiation above said threshold; and
- encoding means connected such to said comparator means that a set of digital numbers is immediately produced which,
   a) if only one element received an amount of incident radiation above said threshold value, identifies the location of said element;
   b) if only at least two elements received radiation above said threshold and said at least two elements are aligned along the same line, represents a starting point and an ending point of said line;
   c) if only at least two elements received radiation above said threshold and said at least two elements are not aligned along the same line, defines an area of said array, which area contains said at least two elements.

As further prior art to the applicant EP-A-0260858 and the article: "The VLSI design of a two dimensional image processing array" of D. Panogiotopoulos e.a., published in Microprocessing and Microprogramming, vol. 14, no. 3/4, October/November 1984, is known.

Further advantages, features and details will be clarified in view of a preferred embodiment of the radiation transducing device according to the present invention, described with reference to a drawing, in which show:
fig. 1 a diagram of a preferred embodiment of a radiation transducing device according to the present invention;
fig. 2 a diagram of an embodiment of a radiation sensitive element of the diagram of fig. 1;
fig. 3 a diagram of a comparator element of fig. 1;
fig. 4 a diagram of the connection of the source followers of fig. 2;
fig. 5 a diagram of an embodiment of the encoding elements of fig. 1;
fig. 6 a diagram of a second preferred embodiment of a radiation transducing device according to the present invention; and
fig. 7 a diagram of detail VII of fig. 6.

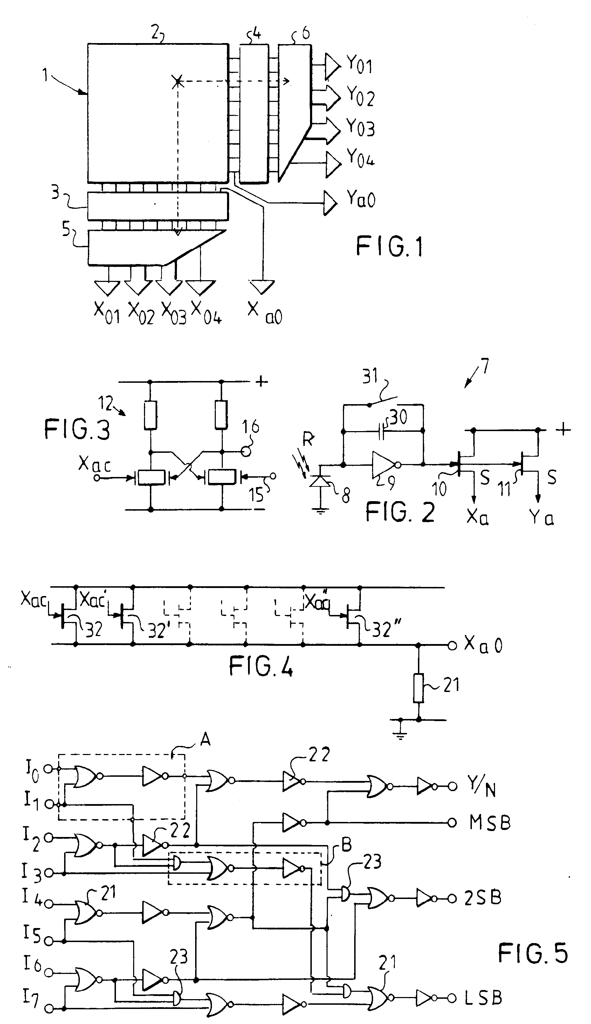

A preferred embodiment of a radiation transducing device 1 (fig. 1) comprises a matrix 2 of arrays of radiation sensitive (pixel) elements, in which both in lying (x) and standing (y) direction a comparator element is connected to each row of pixel elements which are connected in parallel to each other (similar as shown in fig. 4), as is diagrammatically set forth by blocks 3, 4 resp.. To comparator blocks 3, 4 resp. encoding blocks 5, 6 resp. are connected, of which output x₀₁, x₀₂, x₀₃, x₀₄, y₀₁, y₀₂, y₀₃, y₀₄ resp. are derivable, as will clarified in the following description. Outputs xₐ₀, yₐ₀ resp. are directly derivable from the outputs of the matrix or pixel elements.

A preferred embodiment of the pixel element 7 (fig. 2) of the matrix 2 comprises a radiation sensitive element in the form of a photo sensitive diode 8 on which radiation R is incident, which is connected through an inverting amplifier 9 having FET'S 10, 11 resp. for producing a signal to comparator blocks 3, 4 resp. said FET'S connected as source followers. A capacitor 30 and a electronic reset switch 31 are connected over the inverting amplifier 9.

Outputs xₐ and yₐ produce (in a not shown way), similar to the way shown in fig. 4 for each column, row resp. an output signal x_{ac}, y_{ac} resp., which form a common output signal for each column, row resp. of the matrix 2. For the purpose of deriving such a common output signal the source followers 10, 10′, 10˝ etc., the source follows 11, 11′, 11˝ etc. resp. of each pixel element are connected in parallel for each column, row resp..

A comparator element, e.g. a NOR-flipflop 12, is connected to the output x_{ac} (and yₐᵣ) of each row (and column) of the pixel matrix. A threshold value for switching dependent on the amount of radiation incident on a photosensitive diode 8 is determined by the dc bias level of the input x_{ac} relative to the negative supply voltage. This dc bias level can be set e.g. by means of the setting of the inverting amplifiers 9. The input 15 of the NOR-flipflop 12 forms a reset terminal, which may initialize a new image recording. The output 16 has a logic "0" or "1" value, dependent on the fact whether or not the amount of radiation incident to the corresponding column (or row) of the matrix is higher than a predetermined (and preset) value.

The (analog) output xₐ₀ (fig. 4) (and yₐ₀ in a corresponding row) is formed, because of the fact that source followers 32, 32′, 32˝ etc. are connected in parallel and in series to a load or measuring element 21. When radiation is incident to more than one row or column of the radiation sensitive elements 8, the voltage over the load 21 is determined by the largest amount of radiation incident to a "hit" element. The load 21 will in most cases be a resistor, but may also be a switchable capacitor.

The encoding block 5 and 6, preferably of similar structure, may be realized by means of a multiplexer. In this way a data reduction is achieved e.g. for a 100 x 100 image transducing element of thus 10,000 pixel elements of e.g. 100 x 100 »m² each, of 10,000 to 100 data for each image period. The image period can decrease from 1 msec to 10 »sec or the energy consumation may decrease by a factor of 100 in a corresponding way. Further the number of clocking member and power supplies for controlling the image transducing element of the present invention is limited relative to known CCD transducing devices.

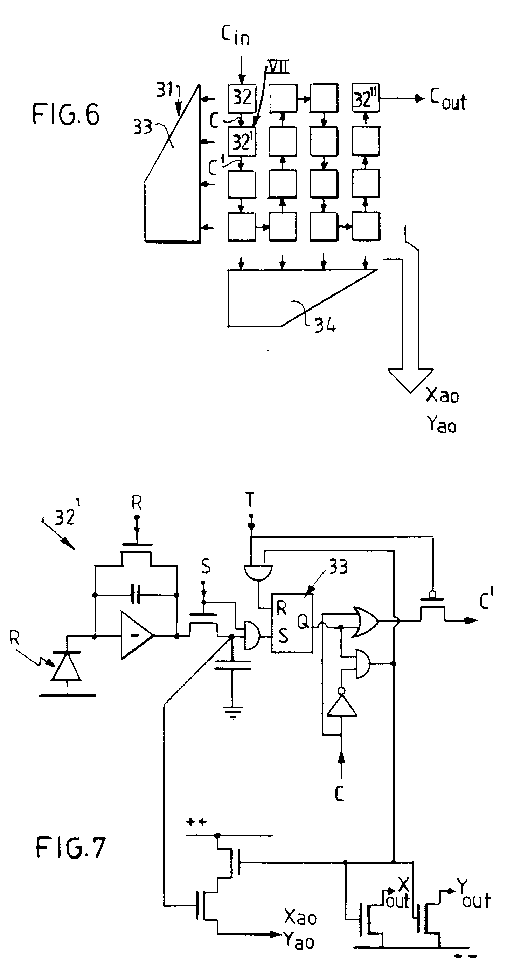

Preferably a combinational logic circuit is used as coding block 5, 6 resp., of which an embodiment (of which purpose of simplicity only 8 bits are shown, is disclosed in fig. 5; the image period can be reduced to e.g. 100 nsec by means of this embodiment, or the energy consumption can be reduced to less than 1 mW. The circuit of fig. 5 comprises NOR-circuits 21, invertors 22 and OR-gates 23. The circuit is to be seen as built of base block A and B+ The shown embodiment accomplishes the encoding for eight inputs (I₀-I₇) connected to outputs 16 of the comparator elements. By means of block A and B a circuit for a number of inputs larger than eight can be built in a simple way.

The outputs of the circuits shown in fig. 5 produce in a consecutive way from the top down:
- Y/N: whether or not an amount of radiation above a preset threshold value to the radiation transducing device is present;
- MSB the most significant bit value of the row or column of the pixel element having the highest rank number of the pixel element to which radiation was incident;
- 2SB the centre bit value of a row or column having the highest rank number to which radiation was incident; and
- LSB the least significant bit value of a row or column having the highest rank number of the pixel element to which radiation was incident.

When two encoding circuits of fig. 5, in the preferred embodiment of the radiation transducing device (both to x and y side) are disposed, while inputs I₀-I₇ are supplied in inversed sequence to a second encoding circuit, the following may be determined from a comparison of bit values at the outputs, because one encoding circuit detects the lowest and the other the highest activated row (or column) value:
- the same result means that only pixelelements of one row, column resp. are activated by radiation; or
- an unequal result defines the borders of an area in which at least two rows (or columns) of pixelelements are activated.

Preferably the output of the encoding blocks 5, 6 resp. contain the following information:
- x₀₁ (y₀₁) a bit which defines whether or not a pixel element in a column (row) is activated (Y/N of fig. 5);
- x₀₂ (y₀₂) a digital number defining the highest column number (row number) of a column (row) of a pixel element to which radiation is incident;
- x₀₃ (y₀₃): a digital number which defines the lowest column number (row number) of a column (row) of a pixel element to which radiation is incident; and
- x₀₄ (y₀₄): a bit value which defines whether or not the highest and lowest column number (row number) is equal; this bit value x₀₄ (y₀₄) is derived in a simple way through a combination allogic circuit which compares the outputs of two logic circuits of fig. 5.

A first radiation transducing device to be realized is completely monolitically in integrated form in a semiconductor substrate and comprises 32 x 32 pixel element, of which the expectation is that a 50% filling degree of the surface is available to radiation sensitive elements.

Other possible embodiments include the so-called flipchip structure, in which a separate diode chip is connected to a separate chip for the peripheral electronics, and the so-called SOI technique, in which electronics is situated at the back side relative to the incident radiation, separated by silicon oxide from the radiation sensitive elements.

Another preferred embodiment 31 (fig. 6) of the present invention comprises pixel elements 32, 32′, 32˝ etc. and encoding blocks 33, 34 resp. similar to those of fig. 1. Further a first pixel element 32 is externally provided with a carry-in signal Cᵢₙ and provides a further carry signal C to a second pixel element 32′ which in term provides a further carry signal C′ and so on until the last pixel element 32˝ which provides a carry-out signal Cₒᵤₜ that may be used for a further integrated transducing device.

By means of a sample signal S (fig. 7) a signal value related to the radiation R it is transferred to a flipflop circuit 33 and by means of an additional clocksignal T to a output carry signal C′. If a pixel element 32′ did not detect radiation, a incoming carry signal C is passed as outgoing carry signal C′ controlled by clock signal T. If however radiation above a threshold value was detected and incoming carry signal C has a zero value, than this means that this pixel element 32′ is the first of all the pixel elements that has been "hit". By means of clocksignal T the flipflop 33 is reset during the second half period of this clocksignal.

By means of the carry signals C added by the sample signal S the transducing device 31 is capable of reading out the row and column numbers of all the pixel elements hit by radiation and also the analog signal values xₐ₀ and yₐ₀ thereof, without much loss of speed.

Further modification and variations of the present invention are possible within the scope of the present invention, defined by the annexed claims.

## Claims

1. A transducing device for transducing radiation, comprising:
- an array (2) of elements arranged along one or more lines and sensitive to radiation;
- comparator means (12) connected to said radiation sensitive elements, for comparing the amount of radiation received by each of said radiation sensitive elements with a predetermined threshold value;
- measuring means (3, 4) connected to each of said radiation sensitive elements for determining, during a predetermined time period, the maximum amount of radiation detected by a single element, if more than one of said elements received radiation above said threshold, or the amount of radiation incident upon a single element, if only said single element received radiation above said threshold; and
- encoding means (5, 6) connected such to said comparator means that a set of digital numbers is immediately produced which,
a) if only one element received an amount of incident radiation above said threshold value, identifies the location of said element;
b) if at least two elements received radiation above said threshold and all of said at least two elements are aligned along the same line, represents a starting point and an ending point within said line;
c) if at least two elements received radiation above said threshold and said at least two elements are not aligned along the same line, defines an area of said array, which area contains all of said at least two elements.

2. A transducing device according to claim 1 wherein the array (2) of element is a matrix consisting of row lines and column lines and said area is a rectangular area.

3. A transducing device according to claim 1 or 2, wherein the measuring means (3, 4) comprise a load common to two or more of the elements from said array.

4. A transducing device according to claim 1, 2 or 3, wherein said encoding means (5, 6) comprise a logical circuit.

5. A transducing device according to any of claims 1-4, wherein means for providing a carry signal are provided between the elements of said array.

## Patentansprüche

1. Wandleranordnung zur Umwandlung von Strahlung mit den folgenden Merkmalen:
- ein Feld (2) von Elementen, die entlang einer oder mehrerer Linien angeordnet und für Strahlung empfindlich sind;
- Komparatormittel (12), die mit den strahlungsempfindlichen Elementen verbunden sind, um die Strahlungsmenge, die von den strahlungsempfindlichen Elementen empfangen wurde, mit einem vorbestimmten Schwellwert zu vergleichen;
- Meßeinrichtungen (3, 4), die mit den strahlungsempfindlichen Elementen verbunden sind, um während einer vorbestimmten Zeitdauer die maximale Strahlungsmenge festzustellen, die von einem einzigen Element detektiert wurde, wenn mehr als eines der Elemente Strahlung über dem Schwellwert empfangen haben, oder um die Strahlungsmenge zu bestimmen, die auf ein einziges Element auftrifft, wenn nur das einzige Element Strahlung über dem Schwellwert empfangen hat; und
- eine Kodiereinrichtung (5, 6), die mit jedem Komparator derart verbunden ist, daß eine Gruppe von Digitalzahlen unmittelbar erzeugt wird, die
a) wenn nur ein Element einfallende Strahlung über dem Schwellwert empfangen hat, die Lage dieses Elementes identifiziert;
b) wenn wenigstens zwei Elemente Strahlung über dem Schwellwert empfangen haben und sämtliche der wenigstens zwei Elemente entlang der gleichen Linie ausgerichtet sind, einen Startpunkt und einen Endpunkt dieser Linie repräsentiert;
c) wenn wenigstens zwei Elemente Strahlung über dem Schwellwert empfangen haben und die wenigstens zwei Elemente nicht längs der gleichen Linie ausgerichtet sind, einen Bereich des Feldes definiert, welcher Bereich sämtliche der wenigstens zwei Elemente enthält.

2. Wandleranordnung nach Anspruch 1, bei welcher das Feld (2) von Elementen eine Matrix ist, die aus Zeilenlinien und Reihenlinien besteht, und der Bereich ein rechteckiger Bereich ist.

3. Wandleranordnung nach den Ansprüchen 1 oder 2, bei welcher die Meßeinrichtung (3, 4) eine Last aufweist, die zwei oder mehreren der Elemente des Feldes gemeinsam ist.

4. Wandleranordnung nach den Ansprüchen 1, 2 oder 3, bei welcher die Kodiereinrichtung (5, 6) eine Logikschaltung aufweist.

5. Wandleranordnung nach einem der Ansprüche 1 bis 4, bei welcher Mittel zur Lieferung eines Trägersignals zwischen den Elementen des Feldes vorgesehen sind.

## Revendications

1. Dispositif de transduction pour assurer la transduction de radiations, caractérisé en ce qu'il comprend :
- une table (2) d'éléments disposés en une ou plusieurs lignes et sensibles aux radiations ;
- des moyens comparateurs (12) connectés auxdits éléments sensibles aux radiations, pour comparer la quantité de radiations reçues par chacun desdits éléments sensibles aux radiations avec une valeur de seuil prédéterminée ;
- des moyens de mesure (3, 4) connectés à chacun desdits éléments sensibles aux radiations pour déterminer, durant une période prédéterminée, la quantité maximale de radiations détectées par un élément isolé si plus d'un desdits éléments a reçu des radiations supérieures audit seuil, ou bien la quantité de radiations incidentes sur un élément isolé dans le cas où seul ledit élément isolé a reçu des radiations supérieures audit seuil ; et
- des moyens d'encodage (5, 6) connectés auxdits moyens comparateurs de façon à produire instantanément un ensemble de nombres numériques qui,
a) si seulement un élément a reçu une quantité de radiations incidentes supérieures à ladite valeur de seuil, identifie la position dudit élément ;
b) si deux éléments au moins ont reçu des radiations supérieures audit seuil et si l'ensemble desdits deux éléments au moins ne sont pas alignés sur la même ligne, représente un point de départ et un point d'arrivée dans ladite ligne ;
c) si deux éléments au moins ont reçu des radiations supérieures audit seuil et si lesdits deux éléments au moins ne sont pas alignés sur la même ligne, définit une aire de ladite table, laquelle aire contient l'ensemble desdits deux éléments au moins.

2. Dispositif de transduction selon la revendication 1, caractérisé en ce que la table (2) d'éléments est une matrice constituée de lignes et de colonnes et en ce que ladite aire est une aire rectangulaire.

3. Dispositif de transduction selon la revendication 1 ou 2, caractérisé en ce que les moyens de mesure (3, 4) comprennent une charge commune à deux ou plusieurs des éléments issus de ladite table.

4. Dispositif de transduction selon la revendication 1, 2 ou 3, caractérisé en ce que lesdits moyens d'encodage (5, 6) comprennent un circuit logique.

5. Dispositif de transduction selon l'une quelconque des revendications 1 à 4, caractérisé en ce que des moyens pour produire un signal de transport sont prévus entre les éléments de ladite table.
